# EUROPEAN PATENT SPECIFICATION

(11) **EP 0 640 195 B1**
(45) Date of publication and mention of the grant of the patent: **22.12.1999**
(21) Application number: 93902462.6
(22) Date of filing: 26.01.1993
(51) Int. Cl.: F16L 55/165, F16L 55/18

(54) **PIPE INSERTION METHOD AND APPARATUS**
VERFAHREN UND VORRICHTUNG ZUM EINFÜHREN EINES ROHRES
PROCEDE ET APPAREIL PERMETTANT D'INTRODUIRE UN TUYAU

(30) Priority: 27.01.1992 GB 9201838
(43) Date of publication of application: 01.03.1995
(73) Proprietor: BG plc, Reading, Berkshire RG6 1PT (GB)
(72) Inventor: PARKES, Adrian Sydney, Burgess Hill, West Sussex RH15 9ED (GB)
(74) Representative: Morgan, David James
(86) International application number: GB9300165
(87) International publication number: WO9315351

(56) References cited:
- EP-A- 0 068 657
- EP-A- 0 484 039
- WO-A-90/07672
- US-A- 3 294 121
- US-A- 3 845 789
- US-A- 4 090 534

## Description

The invention is concerned with a method and apparatus for inserting a first pipe into a second pipe, for example to enable an existing gas pipe to be replaced or reconditioned by a new pipe.

The invention is particularly concerned with a technique known as "live insertion" whereby an existing pipe carrying a fluid, particularly gas, is replaced by a replacement pipe of smaller diameter than the existing pipe while the existing pipe is still maintaining a live flow of fluid. This technique is particularly important when the pipe serves a multi-occupancy or non-domestic structure. If for example, the pipe is serving a block of flats, then interruption of the flow will cause inconvenience to a large number of people. If the pipe is serving an industrial installation, then an industrial process which is normally continuous might have to be interrupted, if a live flow cannot be maintained.

It is already known to insert a new plastics pipe into an existing cast-iron main, for example as described in our earlier Patent Application GB 2103753A. However a number of disadvantages are associated with existing methods, and in particular it is necessary to put a clamp onto the trailing end of the new pipe, as it is being inserted, to prevent gas from escaping along the new pipe before installation of the new pipe is complete. It is difficult to apply a sealing clamp effectively to the new pipe, particularly as the pipe, and hence the clamp, has to move over the ground, as the pipe is being inserted.

WO 90/0672 describes a method for replacing and existing service pipe carrying fluid to an outlet within a property with a replacement service pipe. In the method the outlet is disconnected within the property from the existing service pipe (2) in such a way that both during and after disconnection fluid is prevented from escaping into the property. A desired length of replacement service pipe (18) is then fed into the existing service pipe (2) in such a way that during and after the feeding step fluid is prevented from escaping into the property. The outlet is then connected to the outlet end of the replacement pipe (2) in such a way that during the connection fluid is prevented from escaping into the property and after the connection step fluid is allowed to pass to the outlet solely by way of the replacement pipe (18).

Accordingly, the invention provides a method of inserting a first pipe into a second pipe according to claim 1.

The leading portion of the first pipe is temporarily sealed during insertion of the first pipe to prevent fluid flow along the first pipe until the first pipe has been inserted while a flow of fluid is maintained through the second pipe.

Fluid is only permitted to enter the leading end of the first pipe after the feeding step has been completed and after the first pipe has been connected to the inlet pipe.

The first pipe may be temporarily sealed by a plug.

The plug may subsequently be removed by pushing an elongate member along the inside of the first pipe.

Alternatively, the first pipe may be temporarily sealed by a membrane.

The membrane may subsequently be ruptured by pushing an elongate member along the inside of the first pipe.

The first pipe may be inserted into the second pipe in a direction which is opposite to the direction of flow of fluid along the second pipe. However, it is also possible to insert the first pipe into the second pipe in the same direction as the flow of fluid along the second pipe.

The diameter of the first pipe is often chosen such that it will supply a satisfactory flow of fluid to the premises and the clearance between the pipes may only be sufficient to maintain pressure in the space between the pipes.

There may be means to centralise the leading end of the first pipe with respect to the second pipe.

The centralising means have means for the fluid flow therethrough.

After the first pipe has been fully inserted, and the leading portion of the first pipe has been unsealed, to establish fluid flow along the first pipe, the clearance between the two pipes is sealed.

The fluid flow means are such as to permit the flow therethrough of the fluid being carried by the second pipe, but be such as to prevent the flow of sealant material used to seal the clearance between the two pipes.

The bore may be temporarily blocked by temporarily squeezing the first pipe flat at a position between its ends and is unblocked by subsequently releasing the squeeze.

Clearly in this case the first pipe will be of a flexible material such as polyethylene or other plastics based material.

The fluid may be allowed to flow between the ends of the first pipe as soon as the bore has been unblocked.

Suitably after the first pipe has been fully inserted the clearance between the two pipes is sealed.

Preferably a by-pass is fitted between the second pipe and the inlet pipe before the second pipe is isolated from the inlet pipe to ensure that the inlet pipe is supplied with fluid independently of its junction with the second pipe.

The second pipe may comprise an existing service pipe and the first pipe may comprise a replacement pipe. The second pipe may be a gas pipe.

The invention also provides a seal according to claim 13.

Preferably the, or each, vane in the seal comprises a circular or annular member, whose axis is coincident with the longitudinal axis of the first pipe.

Suitably the, or each vane has holes therethrough, the size of the holes being such that they permit the flow of the fluid, but prevent or restrict the flow of a more viscous sealing material, such as grout.

Alternatively, the or each vane may have notches or slits in its periphery.

Another form of vane may be provided with non-return valves, for example of the Schraeder type, or in the form of hinged flaps.

The seal may comprise a removable plug or a rupturable membrane which, in use, may be fitted to the leading end of the replacement pipe.

By way of example, specific embodiments of the invention will now be described, with reference to the accompanying drawings, in which:
Figure 1 is a diagrammatic view of a service pipe which is to be reconditioned, leading from a gas main to a riser, the riser supplying gas to a block of flats;
Figure 2 shows a first stage in one embodiment of a suitable reconditioning process in which a by-pass circuit is installed;
Figure 3 shows a further stage in this reconditioning process in which a section of the service pipe is removed;
Figure 4 shows a further stage in this reconditioning process in which the insertion of a new pipe inside the old pipe is commenced;
Figure 5 shows completion of the insertion of the new pipe into the old service pipe;
Figure 6 shows yet another stage in this reconditioning process in which a seal at the leading end of the new pipe is released;
Figure 7 shows yet another stage in this reconditioning process in which the trailing end of the new pipe is closed;
Figure 8 shows a still further stage in this reconditioning process in which the new pipe is used to re-establish supply to the riser, enabling the by-pass circuit to be removed;
Figure 9 shows a final stage in this reconditioning process, in which grout or sealant is inserted between the old service pipe and the new inner pipe;
Figure 10 is a perspective view, partly in cross-section, of a first embodiment of the leading end of the new pipe for use in the reconditioning process of Figures 2 to 9;
Figures 11 to 14 show part of four other possible embodiments of the leading end of the new pipe;

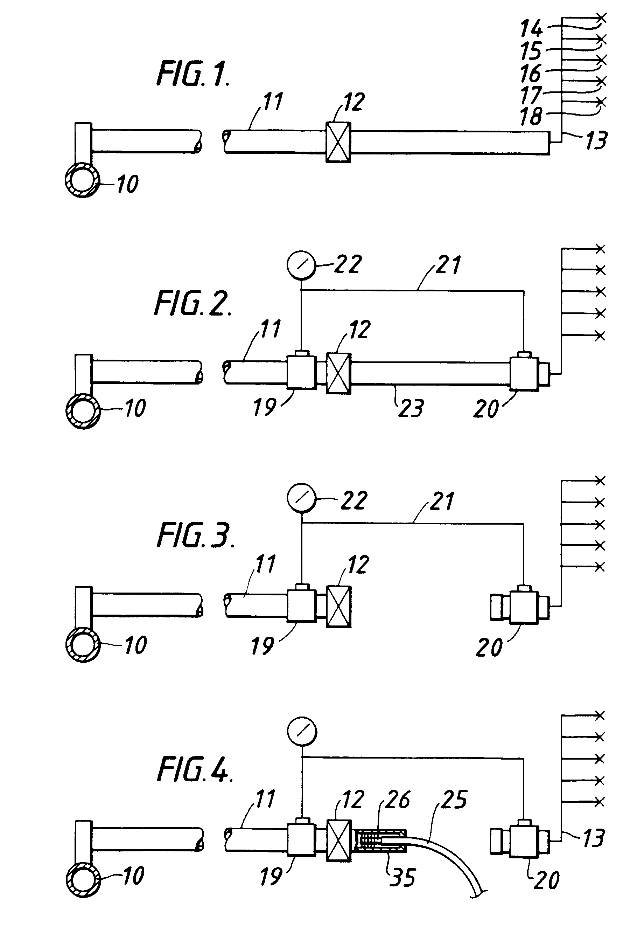

Figure 1 shows a gas main 10 from which runs a service pipe 11. The service pipe 11 supplies gas, via a service valve 12, to a riser 13. The riser 13, in this embodiment, supplies gas to five flats, 14 to 18.

The invention is concerned with the reconditioning of the service pipe 11. The pipe 11 may for example be a steel pipe which has started to leak. Reconditioning is carried out by removing a short length of the old pipe 11, enabling a new flexible plastics pipe to be fed into the old pipe and form a new connection between the main 10 and the riser 13. The invention exists in carrying out this reconditioning while maintaining a live service gas supply to the riser 13.

In one embodiment of the invention, in the first stage; clamps 19 and 20 are fitted upstream and downstream of the service valve 12 using proprietary wrap-around clamps. Drillings are then made through the clamps and into the pipe 11 and a by-pass pipe 21 is fitted together with a pressure gauge 22 to monitor whether or not flow is being properly maintained.

Once the by-pass circuit has been established, the service valve 12 is closed, a section 23 of the old pipe is removed and the exposed part of the old pipe is capped at 24, as illustrated in Figure 3.

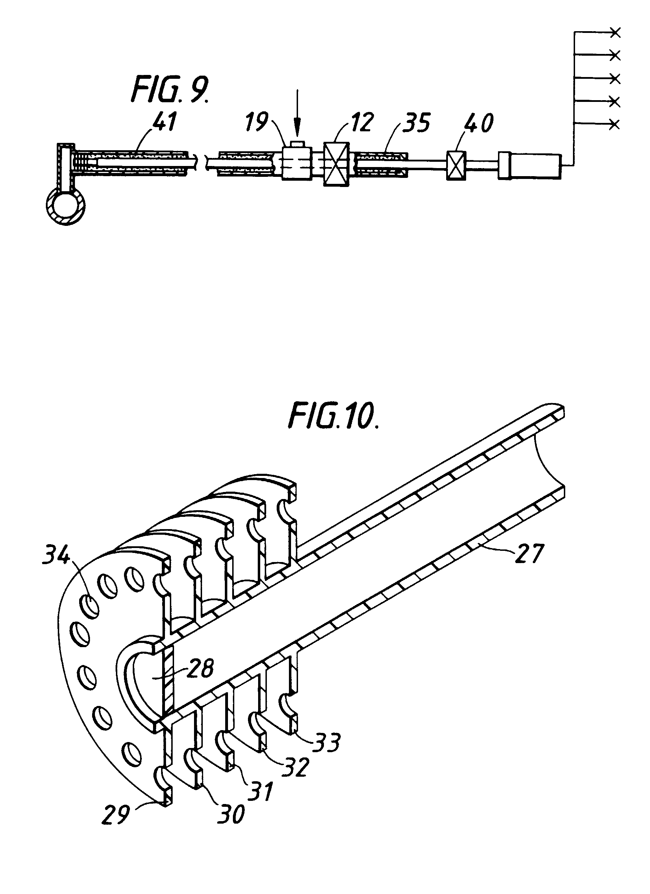

The new flexible pipe 25, for example made from polyethylene, is fitted to a nose cone 26, for example by fusing, the nose cone being shown in more detail in Figure 10. It comprises a tubular portion 27, one end of which is temporarily closed by a plug 28. The tubular portion 27 also has a plurality of centralising vanes 29 to 33. Each vane has a series of small apertures 34 therein, circumferentially spaced apart around the vane.

Returning now to Figure 4, the leading end of the pipe 25 is arranged within an insertion gland fitting 35. This gland fitting 35 is attached adjacent to the valve 12 and the valve 12 is then opened. The pipe 25 can then be pushed along inside the old pipe 11 towards the main 10.

It is an important aspect of this embodiment of the invention that the leading end of the pipe 35 is temporarily sealed by the plug 28, so that gas cannot enter the pipe 25 until it is removed.

Once the leading end of the pipe 25 has moved past the rider 19, it is still possible for gas to flow from the main 10 to the riser 13 because the gas can pass through the apertures 34 in the vanes 29 to 33 and then travel along the annular space between the old pipe and the new pipe.

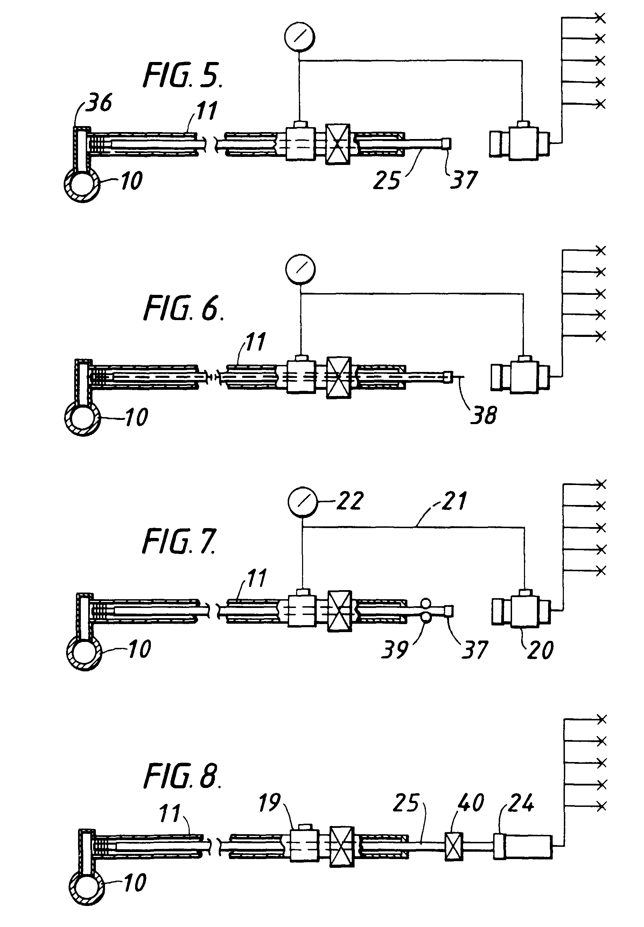

Referring now to Figure 5, insertion of the new pipe 25 terminates when the leading end of the pipe comes into contact with a service tee 36 on the main 10. The pipe 25 is then cut free from the coil of pipe (not shown) from which it has been drawn, and a small insertion gland 37 is fitted to the trailing end of the pipe.

As shown in Figure 6, a rod 38 is then inserted through the gland 37 and is pushed along the new pipe to pop out the plug 28, thus permitting gas to enter the new pipe. The rod 38 is then almost fully withdrawn, the new pipe is sealed at the rear end by squeezing it off at 39, (see Figure 7) and the rod 38 can then finally be withdrawn.

The gland 37 can now be removed, and a connection made between the trailing end of the new pipe and the previously capped end 24 of the old pipe via the valve 40.

At this point the annular passage between the two pipes is still live.

As shown from a comparison of Figures 7 and 8, the by-pass line 21 and pressure gauge 22 are removed and the entry hole into the old pipe from the clamp 20 being sealed. The clamp 19 is retained for use as an injection port, as shown in Figure 9. Sealant material is pumped through the clamp 19 to fill and seal the annular passage between the two pipes, as shown at 41 in Figure 9.

Finally, the old service valve 12, whose function has been taken over by valve 40, is disabled and made inoperative, to avoid any risk of the old valve 12 being shut down on the new polyethylene pipe.

The design of the nose cone 26, and particularly the vanes 29 to 30, is important. It must be possible for gas to flow freely through the vanes, to maintain the live service, but it is preferred that the vanes should be such that the sealant material 41 cannot flow through the vanes. This has the dual purpose of ensuring that sealant does not leak into the main 10, before the sealant has had a chance to set, and also ensuring that the annular passage between the two pipes can be completely filled with sealant material under pressure, before the sealant sets.

In the first embodiment shown in Figure 10, the size of the holes 34 are chosen such that they are large enough to permit the flow of gas, but small enough to restrict or prevent the flow of viscous sealant material.

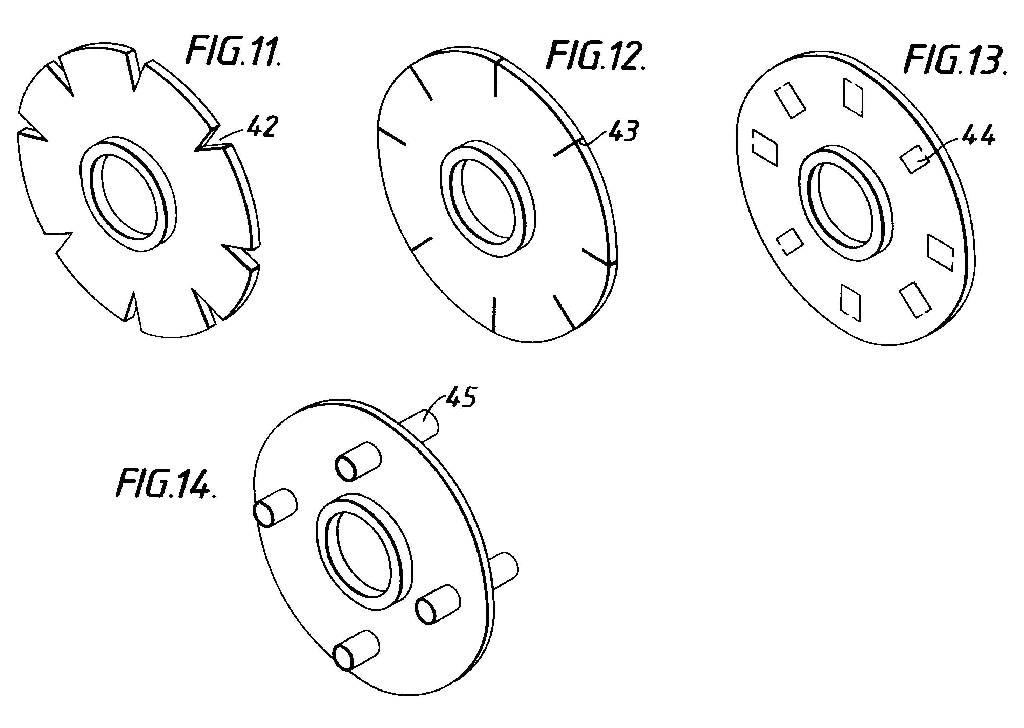

Other possible embodiments of vane are shown in Figures 11 to 14. Although only single vanes are shown in Figures 13 and 14, to illustrate the important feature of each embodiment, it will be appreciated that in practice a plurality of vanes may be used, for example 5 vanes are shown in Figure 10.

In Figure 11, each vane has a plurality of v-shaped notches 42, spaced around the periphery of the vane, to replace the apertures 34 of the first embodiment.

In the Figure 12 embodiment, each vane is provided with a plurality of circumferentially spaced slits 43.

In the Figure 13 embodiment, each vane is provided with apertures which are covered by hinged flaps 44, acting as one-way valves which permit flow of gas in one direction, but prevent flow of sealant in the opposite direction.

In the Figure 14 embodiment, each vane is provided with tubular passages 45 containing non-return valves, for example of the Schraeder type.

Not all the vanes on one nose cone need be of the same type. The nose cone may be of semi rigid plastics, rubber or polymeric material. The nose cone is described as being fused to the new pipe in the above embodiments, yet it may be fitted by other means, for example using adhesive or mechanical means, or a combination of these techniques.

Instead of using the pop out plug 28, a membrane-type seal may be provided, which can be punctured by the rod 38.

The insertion gland 26 may be of the type which can be permanently left in place, or subsequently removed, to suit particular circumstances.

The nose cones and vanes may be manufactured in a range of sizes to suit different sizes of old pipe and new pipe. Cones may for example be manufactured to suit existing service pipes having internal diameters of 1.5" (38mm), 2" (50mm) and 3" (76mm). However, the principle of operation is still the same, and only involves scaling up or scaling down of the design shown.

The sealing material 41 may be of any desired type, to suit the operational requirements, and it may for example be possible to use grout, anaerobic sealing material, or synthetic materials such as epoxy resin.

The old service valve 12 can now be made inoperative.

The gland 35 can be of the type which is either:-
(a) in two splittable parts so that it can be removed from valve 12 and from the replacement service pipe 25. In this case, a temporary split fitting with elastomeric seal is attached to valve 12, or
(b) a combination gland and end seal fitting constructed of an elastomeric material or a metal/elastomeric seal which can be left in place as a permanent seal.

The method and apparatus described may be used to recondition not only steel pipes, but any other form of pipe, for example cast iron pipes.

Should it be necessary to avoid gas leakage, temporary seals may be employed in the old pipe, for example by making a small drilling in the pipe, inserting an inflatable balloon seal, and then inflating the seal to close the pipe temporarily. Such seals can readily be deflated and withdrawn after use, the small insertion drilling then being closed. Alternatively, a series of flanges designed to tightly fit the inside of the old pipe can be inserted through a cut end of the pipe or drilling in the wall to temporarily effect the sealing of the pipe.

The method and apparatus according to the invention are particularly useful where the pipe to be reconditioned services a large number of occupants, for example in a block of flats, or services an industrial unit. Where a large number of occupants is involved, it is obviously particularly desirable to maintain a live service, thus avoiding inconvenience to a large number of people. Equally, it may be important to maintain a live service to an industrial facility, which may be operating a continuous process.

The method and apparatus described above may be used in a variety of applications, and could be useful where any fluid flow service is to be maintained, including liquid flows as opposed to gas flows. With regard to gas supplies, the method and apparatus may have useful application on a number of different types of pipe or combination of pipes, including feeder mains, street mains, service pipes and riser pipes.

In the embodiments of the invention described above, the feeding is conducted by way of the existing service valve 12. However, the feeding step could equally well be performed at any position outside the building where a service valve is not present or at a position on the horizontal or vertical part of the existing service pipe or riser inside the building. The replacement pipe 25 may also be fed into the existing service pipe through a so-called side entry clamp or fitting to avoid cutting the existing service pipe until necessary.

## Claims

1. A method of inserting a first pipe (25) into a second pipe (11), the external diameter of the first pipe (25) with respect to the internal diameter of the second pipe (11) being chosen to provide a clearance between the pipes (25)(11) which is sufficient to maintain the flow of a fluid along the second pipe (11), the second pipe (11) carrying fluid from a feeder pipe (10) to an inlet pipe (13), the method comprising isolating the second pipe (11) from the inlet pipe (13) after ensuring that the inlet pipe (13) is supplied with fluid independently of its junction with the second pipe (11), temporarily sealing the leading end of the first pipe (25), feeding the leading end of the first pipe (25) into the second pipe (11), connecting the trailing end of the first pipe (25) to the inlet pipe (13) either before or after the first pipe (25) is fed into the second pipe (11), maintaining a flow of fluid along the clearance between the pipes (25,11) unsealing the leading end of the first pipe (25) and injecting a viscous curable material into the clearance up to the leading end of the first pipe (25) but not into the feeder pipe (10).

2. A method as claimed in any of claims 1, characterised in that the first pipe (25) is temporarily sealed by a plug (28).

3. A method as claimed in claim 2, characterised in that the plug (28) is subsequently removed by pushing an elongate member (38) along the inside of the first pipe (25).

4. A method as claimed in claim 1, characterised in that the first pipe (25) is temporarily sealed by a membrane.

5. A method as claimed in claim 4, characterised in that the membrane is subsequently ruptured by pushing an elongate member (38) along the inside of the first pipe (25).

6. A method as claimed in claim 5, characterised in that means (29,30,31,32,33) are provided to centralise the leading end of the first pipe (25) with respect to the second pipe (11).

7. A method as claimed in claim 6, characterised in that the centralising means (29) has fluid flow passages (34,42,43,44,45) therethrough.

8. A method as claimed in claim 7, characterised in that the fluid flow passages (34,42,43,44,45) are such as to permit the flow therethrough of the fluid being carried by the second pipe (11), but are such as to prevent the flow of the viscous curable material used to seal the clearance between the two pipes.

9. A method as claimed in any of the preceding claims, characterised in that a by-pass (21) is fitted between the second pipe (11) and the inlet pipe (13) before the second pipe (11) is isolated from the inlet pipe (13) to ensure that the inlet pipe (13) is supplied with fluid independently of its junction with the second pipe (11).

10. A method as claimed in any of the preceding claims, characterised in that the second pipe (11) comprises an existing service pipe, and the first pipe (25) is a replacement pipe.

11. A method as claimed in any of the preceding claims, characterised in that the second pipe (11) is a gas pipe.

12. A method as claimed in any one of the preceding claims, characterised in that the first pipe (25) is inserted into the second pipe (11) in a direction which is opposite to the direction of flow of fluid along the second pipe (11).

13. A seal (26) for use when inserting a first pipe (25) into a second pipe (11) while maintaining a flow of fluid through the second pipe (11), the seal (26) being adapted for attachment to the leading portion of the first pipe (25) to temporarily seal the first pipe (25) during insertion of the first pipe (25), to prevent fluid flow along the first pipe (25) until the first pipe (25) has been inserted, the seal (26) having a vane (29) characterised in that means are provided on the vane (29), such as to permit the flow of the fluid, but prevent or restrict the flow of a more viscous sealing material.

14. A seal as claimed in claim 13, characterised in that the, or each, vane comprises a circular or annular member, the axis of which is coincident with the longitudinal axis of the first pipe.

15. A seal as claimed in claim 14, characterised in that the vane has holes (34) therethrough, the size of the holes (34) being such as to permit the flow of the fluid, but prevent or restrict the flow of a more viscous sealing material.

16. A seal as claimed in claim 14 characterised in that the vane has notches (42) or slits (43) in its periphery.

17. A seal as claimed in claim 16, characterised in that the vane has at least one non-return valve (44) therethrough.

18. A seal as claimed in any of claims 13 to 17 characterised in that the seal (26) includes a removable plug (28).

19. A seal as claimed in any of the claims 13 to 17 characterised in that the seal (26) includes a rupturable membrane.

## Patentansprüche

1. Verfahren zum Einführen eines ersten Rohres (25) in ein zweites Rohr (11), wobei der Außendurchmesser des ersten Rohres (25) mit Bezug auf den Innendurchmesser des zweiten Rohres (11) so gewählt wird, daß ein Zwischenraum zwischen den Rohren (25, 11) vorgesehen wird, der ausreicht, um die Strömung eines Mediums entlang dem zweiten Rohr (11) aufrechtzuerhalten, wobei das zweite Rohr (11) ein Strömungsmittel von einem Zuführrohr (10) zu einem Einlaßrohr (13) fördert, wobei das Verfahren folgende Verfahrensschritte aufweist: Trennen des zweiten Rohres (11) zum Einlaßrohr (13), nachdem sichergestellt ist, daß das Einlaßrohr (13) unabhängig von seiner Verbindung mit dem zweiten Rohr (11) mit Strömungsmittel beliefert wird; vorübergehendes Abdichten des vorderen Endes des ersten Rohres (25), Einführen des vorderen Endes des ersten Rohres (25) in das zweite Rohr (11); Verbinden des hinteren Endes des ersten Rohrs (25) mit dem Einlaßrohr (13) entweder bevor oder nachdem das erste Rohr (25) in das zweite Rohr (11) eingeführt wird; Aufrechterhaltung einer Strömung des Mediums entlang dem Zwischenraum zwischen den Rohren (25, 11); Öffnen des vorderen Endes des ersten Rohres (25) und Injizieren eines viskosen aushärtbaren Materials in den Zwischenraum bis zum vorderen Ende des ersten Rohres, aber nicht in das Zuführrohr (10).

2. Verfahren nach Anspruch 1, dadurch gekennzeichnet, daß das erste Rohr (25) vorübergehend durch einen Stopfen (28) abgedichtet wird.

3. Verfahren nach Anspruch 2, dadurch gekennzeichnet, daß der Stopfen (28) nachher durch Schieben eines langgestreckten Bauteils (38) entlang dem Inneren des ersten Rohres (25) beseitigt wird.

4. Verfahren nach Anspruch 1, dadurch gekennzeichnet, daß das erste Rohr (25) durch eine Membrane vorübergehend abgedichtet wird.

5. Verfahren nach Anspruch 4, dadurch gekennzeichnet, daß die Membrane nachher durch Schieben eines langgestreckten Bauteils (38) entlang dem Inneren des ersten Rohres (25) aufgebrochen wird.

6. Verfahren nach Anspruch 5, dadurch gekennzeichnet, daß Mittel (29, 30, 31, 32, 33) vorgesehen werden, um das vordere Ende des ersten Rohres (25) mit Bezug auf das zweite Rohr (11) zu zentralisieren.

7. Verfahren nach Anspruch 6, dadurch gekennzeichnet, daß die Zentralisierungsmittel (29) Strömungsmittel-Durchflußpassagen (34, 42, 43, 44, 45) aufweisen.

8. Verfahren nach Anspruch 7, dadurch gekennzeichnet, daß die Strömungsmittel-Durchflußpassagen (34, 42, 43, 44, 45) so ausgebildet sind, daß sie den Durchfluß des durch das zweite Rohr (11) geführten Strömungsmittels zulassen, aber so ausgebildet sind, daß sie den Fluß des viskosen aushärtbaren Materials verhindern, das zum Abdichten des Zwischenraumes zwischen den beiden Rohren verwendet wird.

9. Verfahren nach einem der vorangehenden Ansprüche, dadurch gekennzeichnet, daß ein Bypaß (21) zwischen dem zweiten Rohr (11) und dem Einlaßrohr (13) angelegt wird, bevor das zweite Rohr (11) vom Einlaßrohr (13) getrennt wird, um sicherzustellen, daß das Einlaßrohr (13) unabhängig von seiner Verbindung mit dem zweiten Rohr (11) mit Strömungsmittel beliefert wird.

10. Verfahren nach einem der vorangehenden Ansprüche, dadurch gekennzeichnet, daß das zweite Rohr (11) ein vorhandenes Versorgungsrohr umfaßt und das erste Rohr (25) ein Austauschrohr ist.

11. Verfahren nach einem der vorangehenden Ansprüche, dadurch gekennzeichnet, daß das zweite Rohr (11) ein Gasrohr ist.

12. Verfahren nach einem der vorangehenden Ansprüche, dadurch gekennzeichnet, daß das erste Rohr (25) in das zweite Rohr (11) in einer Richtung eingeführt wird, die der Strömungsrichtung des Strömungsmittels entlang dem zweiten Rohr (11) entgegengesetzt ist.

13. Dichtung (26), die verwendet wird, wenn ein erstes Rohr (25) in ein zweites Rohr (11) eingeführt wird, während eine Strömung von Strömungsmittel durch das zweite Rohr (11) hindurch aufrechterhalten wird, wobei die Dichtung (26) am vorderen Teilstück des ersten Rohres (25) anbringbar ist, um vorübergehend das erste Rohr (25) während des Einführens des ersten Rohres (25) abzudichten und einen Strömungsmittelfluß entlang dem ersten Rohr (25) zu verhindern, bis das erste Rohr (25) eingeführt worden ist, wobei die Dichtung (26) einen Flügel (29) aufweist, dadurch gekennzeichnet, daß Mittel am Flügel (29) vorgesehen sind, die den Strömungsmittelfluß zulassen, aber die Strömung eines viskoseren Dichtungsmaterials verhindern oder beschränken.

14. Dichtung nach Anspruch 13, dadurch gekennzeichnet, daß der oder jeder Flügel aus einem runden oder ringförmigen Bauteil besteht, dessen Achse mit der Längsachse des ersten Rohres zusammenfällt.

15. Dichtung nach Anspruch 14, dadurch gekennzeichnet, daß der Flügel (34) Durchgangslöcher aufweist, wobei die Größe der Löcher (34) so ist, daß sie die Strömung des Mediums zulassen, aber die Strömung eines viskoseren Abdichtungsmaterials verhindern oder beschränken.

16. Dichtung nach Anspruch 14, dadurch gekennzeichnet, daß der Flügel Kerben (42) oder Schlitze (43) in der Peripherie aufweist.

17. Dichtung nach Anspruch 16, dadurch gekennzeichnet, daß der Flügel mindestens ein Rückschlagventil (44) aufweist.

18. Dichtung nach einem der Ansprüche 13 bis 17, dadurch gekennzeichnet, daß die Dichtung (26) einen herausnehmbaren Stopfen (28) aufweist.

19. Dichtung nach einem der Ansprüche 13 bis 17, dadurch gekennzeichnet, daß die Dichtung (26) eine aufreißbare Membrane aufweist.

## Revendications

1. Procédé d'introduction d'un premier tuyau (25) dans un deuxième tuyau (11), le diamètre extérieur du premier tuyau (25) par rapport au diamètre intérieur du deuxième tuyau (11) étant choisi de manière à ménager entre les tuyaux (25) (11) un jeu qui est suffisant à maintenir un écoulement de fluide le long du deuxième tuyau (11), le deuxième tuyau (11) transportant du fluide d'un tuyau d'alimentation (10) vers un tuyau d'entrée (13), le procédé comprenant l'isolation du deuxième tuyau (11) du premier tuyau (13) après s'être assuré que le tuyau d'entrée (13) est alimenté en fluide indépendamment de sa jonction avec le deuxième tuyau (11), l'obturation temporaire de l'extrémité de tête du premier tuyau (25), l'introduction de l'extrémité de tête du premier tuyau (25) dans le deuxième tuyau (11), le raccord de l'extrémité de queue du premier tuyau (25) au tuyau d'entrée (13) soit avant, soit après que le premier tuyau (25) a été introduit dans le deuxième tuyau (11), le maintien d'un écoulement de fluide le long du jeu compris entre les tuyaux (25, 11) par suppression de l'obturation de l'extrémité de tête du premier tuyau (25) et l'injection d'une matière visqueuse pouvant durcir dans le jeu jusqu'à l'extrémité de tête du premier tuyau (25), mais non pas dans le tuyau d'alimentation (10).

2. Procédé selon la revendication 1, caractérisé en ce que le premier tuyau (25) est temporairement obturé par un bouchon (28).

3. Procédé selon la revendication 2, caractérisé en ce que le bouchon (28) est ultérieurement enlevé par poussée d'un élément allongé (38) le long de l'intérieur du premier tuyau (25).

4. Procédé selon la revendication 1, caractérisé en ce que le premier tuyau (25) est temporairement obturé par une membrane.

5. Procédé selon la revendication 4, caractérisé en ce que la membrane est ultérieurement déchirée par poussée d'un élément allongé (38) le long de l'intérieur du premier tuyau (25).

6. Procédé selon la revendication 5, caractérisé en ce que des moyens (29, 30, 31, 32, 33) sont prévus pour centrer l'extrémité de tête du premier tuyau (25) par rapport au deuxième tuyau (11).

7. Procédé selon la revendication 6, caractérisé en ce que le moyen de centrage (29) comprend des passages d'écoulement de fluide (34, 42, 43, 44, 45) qui passent par lui.

8. Procédé selon la revendication 7, caractérisé en ce que les passages d'écoulement de fluide (34, 42, 43, 44, 45) sont tels qu'ils permettent à l'écoulement de fluide passant par eux d'être transporté par le deuxième tuyau (11), mais ils sont tels qu'ils empêchent l'écoulement de la matière visqueuse pouvant durcir et utilisée pour obturer le jeu compris entre les deux tuyaux.

9. Procédé selon l'une quelconque des revendications précédentes, caractérisé en ce qu'une dérivation (21) est montée entre le deuxième tuyau (11) et le tuyau d'entrée (13) avant que le deuxième tuyau (11) soit isolé du tuyau d'entrée (13) pour garantir que le tuyau d'entrée (13) est alimenté en fluide indépendamment de sa jonction avec le deuxième tuyau (11).

10. Procédé selon l'une quelconque des revendications précédentes, caractérisé en ce que le deuxième tuyau (11) consiste en un tuyau de distribution existant et le premier tuyau (25) est un tuyau de remplacement.

11. Procédé selon l'une quelconque des revendications précédentes, caractérisé en ce que le deuxième tuyau (11) est un tuyau de gaz.

12. Procédé selon l'une quelconque des revendications précédentes, caractérisé en ce que le premier tuyau (25) est introduit dans le deuxième tuyau (11) dans un sens qui est opposé au sens d'écoulement du fluide le long du deuxième tuyau (11).

13. Joint (26) destiné à être utilisé lors de l'introduction d'un premier tuyau (25) dans un deuxième tuyau (11) tout en maintenant un écoulement de fluide dans le deuxième tuyau (11), le joint (26) étant conçu pour sa fixation à la partie de tête du premier tuyau (25) afin d'obturer temporairement le premier tuyau (25) pendant l'introduction du premier tuyau (25) afin d'empêcher l'écoulement de fluide le long du premier tuyau (25) jusqu'à ce que le premier tuyau (25) ait été introduit, le joint (26) ayant une ailette (29), caractérisé en ce que des moyens sont prévus sur l'ailette (29) de façon à permettre l'écoulement de fluide, mais à empêcher ou à restreindre l'écoulement d'une matière d'obturation plus visqueuse.

14. Joint selon la revendication 13, caractérisé en ce que la ou chaque ailette consiste en un élément circulaire ou annulaire dont l'axe coïncide avec l'axe longitudinal du premier tuyau.

15. Joint selon la revendication 14, caractérisé en ce que l'ailette comporte des trous (34) qui la traversent, la dimension des trous (34) étant telle qu'elle permet l'écoulement du fluide, mais empêche ou restreint l'écoulement d'une matière d'obturation plus visqueuse.

16. Joint selon la revendication 14, caractérisé en ce que l'ailette comporte des encoches (42) ou des fentes (43) à sa périphérie.

17. Joint selon la revendication 16, caractérisé en ce que l'ailette comporte au moins une soupape d'arrêt (44) qui passe à travers elle.

18. Joint selon l'une quelconque des revendications 13 à 17, caractérisé en ce que le joint (26) comprend un bouchon amovible (28).

19. Joint selon l'une quelconque des revendications 13 à 17, caractérisé en ce que le joint (26) comprend une membrane pouvant être déchirée.
